(19) Europäisches Patentamt
European Patent Office
Office européen des brevets

(11) **EP 4 545 308 A1**

(12) **EUROPEAN PATENT APPLICATION**
published in accordance with Art. 153(4) EPC

(43) Date of publication:
**30.04.2025 Bulletin 2025/18**

(21) Application number: **23827294.2**

(22) Date of filing: **23.06.2023**

(51) International Patent Classification (IPC):
**B41M 5/52** (2006.01) **B32B 5/32** (2006.01)
**B32B 27/00** (2006.01) **B32B 27/20** (2006.01)

(52) Cooperative Patent Classification (CPC):
**B32B 5/32; B32B 27/00; B32B 27/20; B41M 5/52**

(86) International application number:
**PCT/JP2023/023357**

(87) International publication number:
**WO 2023/249112 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.06.2022 JP 2022102227**

(71) Applicant: **Yupo Corporation
Tokyo 101-0062 (JP)**

(72) Inventors:
• **KITAMURA Yuka
Kamisu-shi, Ibaraki 314-0102 (JP)**
• **SUGAMATA Yutaro
Kamisu-shi, Ibaraki 314-0102 (JP)**

(74) Representative: **Zimmermann & Partner
Patentanwälte mbB
Postfach 330 920
80069 München (DE)**

(54) **RECORDING SHEET**

(57)  The present invention relates to a recording sheet including a coating layer, a print receiving layer and a liquid-absorptive layer in the stated order. The coating layer contains an aqueous binder as a resin component, each of the print receiving layer and the liquid-absorptive layer is a porous layer containing a thermoplastic resin, a liquid absorption rate at a surface on the print receiving layer side is 5 to 25 $cc/m^2 \cdot 0.5$ s, a liquid-absorptive capacity is 10 $cc/m^2$ or more, and a content of an inorganic filler per 100 parts by mass of the aqueous binder in the coating layer is 9 parts by mass or less.

FIG. 1

EP 4 545 308 A1

**Description**

Technical Field

The present invention relates to a recording paper.

Background Art

In recent years, ink-jet printers have come to produce images that are not inferior to those obtained by multicolor offset printing or color electrophotographic methods. Ink-jet printers are also characterized by being lower in running cost for color printing than electrophotographic printers, and thus have come to widespread use. Among them, ink-jet printers using water-based ink that are less likely to cause environmental and safety problems as compared to oil-based ink have become mainstream.

Accordingly, the uses of ink-jet recording paper have expanded to poster and drawing applications. For this reason, recording paper and recording ink have also been required to have print quality, abrasion resistance and the like more than ever before.

In the fields of commercial printing and the like, a so-called on-demand printing method in which variable information is digitized and printed at a high rate has been introduced. Ink-jet printers based on the on-demand printing method have appeared. Such an on-demand printing method, in which information can be directly printed on a medium such as paper without undergoing plate making, thus is suitable even for printing for a small number of copies. Recently, speed enhancement of apparatus and definition enhancement has markedly progressed, resulting in expansion of applications. Accordingly, recording paper is strongly required to have an improved drying property.

For example, in Patent Literature 1, a porous resin film adjusted to a liquid-absorptive volumetric capacity equal to or greater than a specific value using calcium carbonate powder treated with a surface treatment agent having a HLB value of 5 to 100 is proposed for printing by an ink-jet printer using water-based ink.

On the other hand, ink-jet printers using solvent-based ink are also preferred because of their good water resistance and ink fixing property, and the like. As in, for example, Patent Literatures 2 and 3, various studies are conducted on printing by an ink-jet printer using solvent-based ink.

For example, Patent Literature 2 discloses an ink-jet recording medium in which an ink-receiving layer containing at least one pigment having an average particle size of 2 to 17 $\mu$m and selected from amorphous silica, alumina, alumina hydrate, aluminosilicate and a hydrotalcite group mineral, and an adhesive is provided on a support, the adhesive comprising a vinyl chloride-vinyl acetate copolymer.

Patent Literature 3 discloses a semigloss oil-based ink-jet recording sheet in which an oil-based ink-receiving gloss layer mainly composed of a vinyl chloride-acrylic copolymer having a glass transition temperature of 20 to 55°C is formed on at least one surface of a support, the surface of the oil-based ink-receiving gloss layer has a 75 degree specular gloss of 20 to 70% as measured according to JIS P 8142: 2005, "Test method for 75 degree specular gloss", and the 75 degree specular gloss of a portion on which a printed image with oil-based ink is formed is equal to or greater than the 75 degree specular gloss of a blank portion.

Citation List

Patent Literature

Patent Literature 1: Japanese Patent Laid-Open NO. 2001-164017
Patent Literature 2: Japanese Patent Laid-Open NO. 2001-270238
Patent Literature 3: Japanese Patent Laid-Open NO. 2010-234677

Summary of Invention

Technical Problem

However, studies by the present inventors have revealed that even though the liquid-absorptive volumetric capacity is relatively large, it may be impossible to obtain a sufficient drying property if the liquid absorption rate (ink absorption rate) is relatively low.

It has also been revealed that although the liquid absorption rate at a surface on the print receiving layer side is preferably high from the viewpoint of improving ink dryness during printing, an excessively high liquid absorption rate may cause color sinking of ink, and formation of granular patterns due to bubble blowout from opening portions of the surface on the print receiving layer side.

The ink-receiving layer in Patent Literature 2 is a coating layer containing a pigment. In the case of a pigment coating as in Patent Literature 2, certain ink dryness can be obtained, but water and contaminants are easily deposited, and the strength of the receiving layer may be relatively low. This may lead to deterioration of print quality including abrasion resistance.

In the case of a receiving layer containing a vinyl chloride-type copolymer as in Patent Literature 3, printing is performed by fixing a pigment with the vinyl chloride-type copolymer immersed in a solvent absorbed from ink, and therefore there may arise waviness by the solvent, occurrence of blocking, and adverse effects on weather resistance.

Accordingly, an object of the present invention is to provide a recording paper which is excellent in print quality and drying property, and has excellent weather resistance such that water-resistance/stain-resistance treatment is not necessary even when a printed matter is left outdoors for a long period of time.

Solution to Problem

Specifically, the present invention relates to the following items 1 to 8.

1. A recording paper comprising a coating layer, a print receiving layer and a liquid-absorptive layer in the stated order, wherein

the coating layer contains an aqueous binder as a resin component,
each of the print receiving layer and the liquid-absorptive layer is a porous layer containing a thermoplastic resin,
a liquid absorption rate at a surface on the print receiving layer side is 5 to 25 $cc/m^2 \cdot 0.5$ s,
a liquid-absorptive capacity is 10 $cc/m^2$ or more, and
a content of an inorganic filler per 100 parts by mass of the aqueous binder in the coating layer is 9 parts by mass or less.

2. The recording paper according to item 1, wherein a porosity of the print receiving layer is 30 to 50%, and a porosity of the liquid-absorptive layer is 40 to 60%.

3. The recording paper according to item 1 or 2, wherein the each of the print receiving layer and the liquid-absorptive layer is a stretched layer containing a filler.

4. The recording paper according to any one of items 1 to 3, wherein a content of the filler in the print receiving layer is 45 to 75 mass%.

5. The recording paper according to any one of items 1 to 4, comprising a filler having a hydrophobized surface as the filler in the print receiving layer.

6. The recording paper according to any one of items 1 to 5, wherein an average pore size of the print receiving layer is 0.5 to 20 $\mu$m.

7. The recording paper according to any one of items 1 to 6, wherein a content of the resin component in the coating layer is more than 80 mass%.

8. The recording paper according to any one of items 1 to 7, wherein a coating mass of the coating layer after drying is 0.05 to 5 $g/m^2$.

Advantageous Effect of Invention

According to the present invention, a recording paper excellent in print quality, drying property and weather resistance can be provided.

Brief Description of Drawing

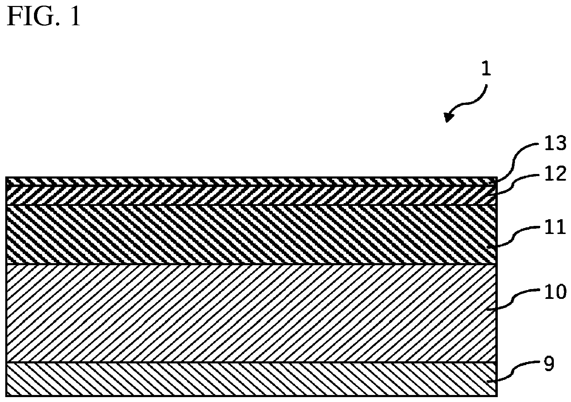

Fig. 1 is a sectional view showing an example of a recording paper according to the present embodiment.

Description of Embodiments

Hereinafter, recording papers according to embodiments of the present invention will be described in detail, but the present invention is not limited to these embodiments. In the following description, the term "(meth)acryl" refers to both acryl and methacryl. Similarly, the term "(meth)acrylate" refers to both acrylate and methacrylate.

[Recording paper]

A recording paper according to the present embodiment comprises a coating layer, a print receiving layer and a liquid-absorptive layer in the stated order. The coating layer contains an aqueous binder as a resin component, each of the print receiving layer and the liquid-absorptive layer is a porous layer containing a thermoplastic resin, a liquid absorption rate at a surface on the print receiving layer side is 5 to 25 cc/m$^2$·0.5 s, a liquid-absorptive capacity is 10 cc/m$^2$ or more, and a content of an inorganic filler per 100 parts by mass of the aqueous binder in the coating layer is 9 parts by mass or less.

Fig. 1 is a sectional view showing an example of the recording paper according to the present embodiment. In Fig. 1, a recording paper 1 comprises a coating layer 13, a print receiving layer 12 and a liquid-absorptive layer 11 in the stated order. The liquid-absorptive layer 11 is preferably in contact with the print receiving layer 12. Preferably, the recording paper according to the present embodiment comprises a support layer 10 on a side opposite to the print receiving layer 12 when viewed from the liquid-absorptive layer 11, which will be described later. Preferably, the recording paper further comprises a back surface layer 9 on a surface thereof on a side opposite to the print receiving layer 12 when viewed from the liquid-absorptive layer 11. Fig. 1 shows an example of the recording paper 1 which comprises the coating layer 13, the print receiving layer 12, the liquid-absorptive layer 11, the support layer 10 and the back surface layer 9. In the present specification, the term "surface on the print receiving layer side" of the recording paper means a surface on the print receiving layer side when viewed from the liquid-absorptive layer of the recording paper. In other words, this corresponds to a surface of the recording paper on the coating layer side.

In the recording paper according to the present embodiment, the liquid absorption rate at the surface on the print receiving layer side is 5 to 25 cc/m$^2$·0.5 s. The liquid absorption rate is 5 cc/m$^2$·0.5 s or more, preferably 7 cc/m$^2$·0.5 s or more, more preferably more than 10 cc/m$^2$·0.5 s, further more preferably 12 cc/m$^2$·0.5 s or more, and particularly preferably 13 cc/m$^2$·0.5 s or more. When the liquid absorption rate is equal to or greater than the above-described value, ink dryness during printing can be improved, and blur of print can be suppressed. On the other hand, the liquid absorption rate is 25 cc/m$^2$·0.5 s or less, and preferably 20 cc/m$^2$·0.5 s or less. When the liquid absorption rate is equal to or smaller than the above-described value, color sinking of ink and formation of granular patterns due to bubble blowout from opening portions of the surface on the print receiving layer side can be suppressed, and print quality such as print density can be improved.

The liquid absorption rate at the surface on the print receiving layer side is a liquid transfer amount measured by the Bristow procedure-based liquid absorptivity test method described in Japan Tappi No. 51: 2000, which means an absorptive capacity per unit area 500 milliseconds after dropwise addition of a measurement solution.

The liquid-absorptive capacity of the recording paper according to the present embodiment is 10 cc/m$^2$ or more, preferably 13 cc/m$^2$ or more, more preferably 15 cc/m$^2$ or more, further more preferably 16 cc/m$^2$ or more, and particularly preferably 18 cc/m$^2$ or more. When the liquid-absorptivity capacity is equal to or greater than the above-described value, the drying property can be improved. On the other hand, from the viewpoint of improving productivity and the viewpoint of suppressing dry down, the liquid-absorptive capacity is preferably 100 cc/m$^2$ or less, and more preferably 90 cc/m$^2$ or less.

The liquid-absorptive capacity of the recording paper refers to a measured value of the liquid-absorptive capacity from the surface on the print receiving layer side, which is a value of Cobb absorptiveness measured as specified in JIS P8140: 1998. However, the test solvent used is not water, but diethylene glycol ethyl methyl ether, and the contact time is 60 seconds.

In the recording paper according to the present embodiment, the liquid absorption rate at the surface on the print receiving layer side is 5 to 25 cc/m$^2$·0.5 s, and the liquid-absorptive capacity is 10 cc/m$^2$ or more. That is, in the present embodiment, the liquid absorption rate and the liquid-absorptive capacity are preferably in the above-described ranges. As described above, the present inventors have found that even though the liquid-absorptive volumetric capacity is relatively large, it may be impossible to obtain a sufficient drying property if the liquid absorption rate is relatively low. It has also been revealed that although the liquid absorption rate at a surface on the print receiving layer side is preferably high from the viewpoint of improving ink dryness during printing, an excessively high liquid absorption rate may cause color sinking of ink, and formation of granular patterns due to bubble blowout from opening portions of the surface on the print receiving layer side. To address this, the present invention has been made through the findings that a recording paper which comprises a print receiving layer, a liquid-absorptive layer and a specified coating layer and in which the liquid absorption rate at a surface of the recording paper on the print receiving layer side is in a specific range and the liquid-absorptive capacity is equal to or greater than a specific value, is excellent in print quality, drying property and weather resistance can be obtained.

Preferably, each of the print receiving layer and the liquid-absorptive layer is a stretched layer containing a filler. Preferably, the print receiving layer and the liquid-absorptive layer are each obtained in the form of a stretched layer by, for example, a method in which the print receiving layer and the liquid-absorptive layer are co-extruded, followed by co-stretching, or the print receiving layer is extrusion-laminated onto the liquid-absorptive layer, followed by co-stretching. This enables simplification of the production process and reduction of production cost.

**In** a common coating paper for printing, a coating layer containing a pigment and a binder is provided on a surface of a substrate such as paper. Calcium carbonate, kaolin or the like is commonly used as a pigment for imparting an appropriate ink receiving property. Such a coating layer, which contains a large amount of the pigment, thus is fragile, and easily breaks when bended. In addition, the pigment component is likely to reduce the glossiness of the surface. On the other hand, when the print receiving layer is made porous through stretching, it is easy to make the layer porous sufficiently with a filler content smaller than that of the aforementioned coating layer, and a desired liquid absorption rate and liquid-absorptive capacity are easily met. A porous layer obtained in this way has high bending resistance. In addition, a higher glossiness can easily be obtained.

When the print receiving layer is molded by stretching, use of materials described later is preferable because the physical properties described above are easily achieved. Preferred aspects of the liquid-absorptive layer will also be described later.

(Coating layer)

The coating layer contains an aqueous binder as a resin component. Since the coating layer contains an aqueous binder as a resin component, printability including adhesion to ink can be improved. Here, antistatic agents described later are excluded from the aqueous binder. Examples of the aqueous binder include a water-soluble resin and a water-dispersible resin (aqueous resin emulsion). When the coating layer contains a water-dispersible resin, the cohesive force of the coating layer can be enhanced to improve abrasion resistance, and it tends to be possible to enhance the ink fixing property as a pigment in the ink is easily fixed to a surface of the recording paper. When the coating layer contains a water-dispersible resin, the liquid absorption rate can be adjusted to be higher as compared to a case where another aqueous binder such as a water-soluble resin is used. From the viewpoint of improving adhesion to the ink, the aqueous binder is preferably an ionic binder, and more preferably a cationic binder. When the aqueous binder is a cationic binder, the cation equivalent amount is preferably 5 meq/g or less, more preferably 4 meq/g or less, and further more preferably 3 meq/g or less.

The coating layer can be formed by preparing a coating solution for forming a coating layer, which contains an aqueous binder, and applying the coating solution to a surface of a laminated film.

From the viewpoint of improving smoothness, the content of resin components in the coating layer is preferably more than 80 mass%, and more preferably 85 mass% or more, and even more preferably 90 mass% or more, and may be 100 mass%. The content of resin components in the coating layer means, in the case where the coating layer contains resin components as an antistatic agent and the like in addition to the aqueous binder, a proportion of the total solid content of these resin components in the coating layer.

From the viewpoint of suppressing of blur of print, the coating layer may be composed only of an aqueous binder, or may be composed only of an aqueous binder, an inorganic filler and an auxiliary agent component described later, or may be composed only of an aqueous binder and an auxiliary agent component.

From the viewpoint of improving adhesion to ink, the dry solid content (coating mass after drying) of the coating layer is preferably 0.05 g/m$^2$ or more, more preferably 0.08 g/m$^2$ or more, and further more preferably 0.1 g/m$^2$ or more. From the viewpoint of promoting permeation of ink into the porous layer, and obtaining a drying property and image sharpness, the dry solid content (coating mass after drying) of the coating layer is preferably 10 g/m$^2$ or less, more preferably 5 g/m$^2$ or less, further more preferably 2 g/m$^2$ or less, even more preferably 0.5 g/m$^2$ or less, and particularly preferably 0.25 g/m$^2$ or less.

Examples of the water-soluble resin include a urethane-type resin, a (meth)acryl-type resin, and an ethyleneimine polymer.

Examples of the aqueous resin emulsion include a urethane-type resin emulsion, a (meth)acrylic acid-type resin, and an olefin-type resin emulsion. When the coating layer contains a water-soluble resin emulsion, it is possible to further improve the ink fixing property, and further improve abrasion resistance.

They may be used alone, or in combination of two or more thereof.

The (meth)acrylic acid-type resin preferably has an amino group, a quaternary ammonium salt structure or a phosphonium salt structure, and further more preferably has an amino group or a quaternary ammonium salt structure.

When the coating layer contains a water-soluble resin, the content (solid content) of the water-soluble resin in the coating layer is preferably 10 mass% or more, more preferably 20 mass% or more, further more preferably 25 mass% or more, and particularly preferably 30 mass% or more, from the viewpoint of improving adhesion to ink. From the viewpoint of promoting permeation of ink into the porous layers (print receiving layer and liquid-absorptive layer), and obtaining a drying property and image sharpness, the content (solid content) of the water-soluble resin in the coating layer can be 100 mass% or less, 95 mass% or less, or 91 mass% or less.

Examples of the ethyleneimine polymer include polyethylene imine, poly(ethyleneimine-urea), an ethyleneimine adduct of polyamine polyamide, and a modified product or a hydroxide thereof. Examples of the modified product include an alkyl-modified product, a cycloalkyl-modified product, an aryl-modified product, an allyl-modified product, an aralkyl-modified product, a benzyl-modified product, a cyclopentyl-modified product, a cyclic aliphatic hydrocarbon-modified product, and a glycidol-modified product. The coating layer may further contain an ethyleneimine polymer. When the coating layer contains an ethyleneimine polymer, high affinity for various print inks, in particular, ultraviolet curable ink is exhibited, so that printability is easily improved.

From the viewpoint of improving adhesion to ink, the content of the ethyleneimine polymer in the coating layer is preferably 10 mass% or more, more preferably 20 mass% or more, and further more preferably 25 mass% or more. The upper limit of the content is not limited, and can be 100 mass% or less, 90 mass% or less, or 80 mass% or less.

When the coating layer contains a water-dispersible resin, the content (solid content) of the water-dispersible resin in the coating layer is preferably 20 mass% or more, more preferably 30 mass% or more, further more preferably 40 mass% or more, even more preferably 60 mass% or more, and particularly preferably 80 mass% or more from the viewpoint of ink fixing property. The upper limit of the content may be 100 mass%.

From the viewpoint of promoting permeation of ink into the porous layers (print receiving layer and liquid-absorptive layer), and obtaining a drying property and image sharpness, the average particle size of the water-dispersible resin in the coating layer is preferably 5 μm or less, more preferably 3 μm or less, further more preferably 1 μm or less, even more preferably 0.5 μm or less, and particularly preferably 0.2 μm or less.

The minimum film forming temperature (MFT) of the water-dispersible resin is preferably 100°C or lower. By setting MFT to 100°C or lower, film formability of the coating layer, in particular, film formability at room temperature is improved, and fall of particles from the porous is easily prevented. MFT is preferably 80°C or lower, more preferably 40°C or lower, and further more preferably 10°C or lower. The lower limit is not limited, and is typically -20°C or higher.

The coating layer may contain an inorganic filler, and the content of the inorganic filler in the coating layer is 9 parts by mass or less per 100 parts by mass of the aqueous binder. **In** other words, the coating layer does not contain an inorganic filler, or contains an inorganic filler in an amount of 9 parts by mass or less. When the content of the inorganic filler is 9 parts by mass or less per 100 parts by mass of the aqueous binder, pores that are open on the surface of the print receiving layer are hardly filled, the print ink thus easily permeates the porous layer, and a drying property and image sharpness can be easily obtained. In addition, contamination of the recording paper and peeling of the printed image due to fall of the inorganic filler can be effectively prevented, the texture of the porous layer (paper quality) can be better reflected, and adhesion to ink, weather resistance, abrasion resistance and the like can be improved. From such a viewpoint, the content of the inorganic filler is preferably 5 parts by mass or less, more preferably 3 parts by mass or less, and further more preferably 0.1 parts by mass or less. Particularly preferably, the coating layer is free of the inorganic filler. From the same viewpoint, the content of the inorganic filler in the coating layer is preferably 9 parts by mass or less, more preferably 5 parts by mass or less, further more preferably 3 parts by mass or less, and particularly preferably 0.1 parts by mass or less per 100 parts by mass of resin components.

The content of the inorganic filler in the coating layer is 9 parts by mass or less, preferably 5 parts by mass or less, more preferably 3 parts by mass or less, and further more preferably 0.1 parts by mass or less per 100 parts by mass of the aqueous binder. Particularly preferably, the content is 0 parts by mass (the coating layer is free of the inorganic filler).

On the other hand, from the viewpoint of preventing blocking, it is preferable that the coating layer contains a slight amount of an inorganic filler, and specifically, the content of the inorganic filler in the coating layer is preferably 0.1 parts by mass or more, more preferably 0.2 parts by mass, further more preferably 0.3 parts by mass or more per 100 parts by mass of the aqueous binder.

The inorganic filler that can be contained in the coating layer is not limited, and can be the same as inorganic particles described later as a filler that can be contained in the print receiving layer and the like.

The coating layer may contain an antistatic agent from the viewpoint of improving handleability as recording paper by preventing deposition of dust and conveyance failure during printing, which are caused by electrostatic charging.

Among the antistatic agents, polymeric antistatic agents are preferable from the viewpoint of reducing, for example, surface contamination caused by bleed-out.

The polymeric antistatic agent is not limited, and a cationic, anionic, amphoteric or nonionic antistatic agent may be used alone, or in combination of two or more thereof.

As the cationic antistatic agent, an antistatic agent having an ammonium salt structure, a phosphonium salt structure or the like can be exemplified. As the anionic antistatic agent, an antistatic agent having the structure of an alkali metal salt (lithium salt, sodium salt, potassium salt or the like) of sulfonic acid, phosphoric acid, carboxylic acid or the like can be exemplified. The anionic antistatic agent may be an antistatic agent having the structure of an alkali metal salt of acrylic acid, methacrylic acid, maleic acid (anhydride) or the like in the molecular structure.

As the amphoteric antistatic agent, an antistatic agent having both the structures of a cationic antistatic agent and an anionic antistatic agent in the same molecule can be exemplified. Examples of the amphoteric antistatic agent include a betain-type antistatic agent. As the nonionic antistatic agent, an ethylene oxide polymer having an alkylene oxide structure, a polymer having an ethylene oxide polymer component in the molecular chain, and the like can be exemplified. Examples of other antistatic agents include a polymeric antistatic agent having boron in the molecular structure.

The polymeric antistatic agent is, among those mentioned above, preferably a cationic antistatic agent, more preferably a nitrogen-containing polymeric antistatic agent, further more preferably an antistatic agent having an ammonium salt structure, particularly preferably an acrylic resin having a tertiary or quaternary ammonium salt structure, and most preferably a quaternary ammonium salt structure.

From the viewpoint of preventing electrostatic charging, the content of the antistatic agent in the coating layer is preferably 0.01 parts by mass or more, more preferably 1 part by mass or more, and further more preferably 2 parts by mass or more per 100 parts by mass of the aqueous binder. From the viewpoint of the water resistance of the coating layer, the content of the antistatic agent in the coating layer is preferably 150 parts by mass or less, more preferably 140 parts by mass or less, and further more preferably 130 parts by mass or less per 100 parts by mass of the aqueous binder.

The coating layer may contain other auxiliary agent components such as a cross-linker, a cross-linking promoter, a pH adjuster and an antifoaming agent if necessary.

(Print receiving layer)

The print receiving layer is a porous layer containing a thermoplastic resin. The print receiving layer is preferably a stretched layer containing a filler as described above. That is, the print receiving layer is preferably a stretched layer containing a thermoplastic resin and a filler. When printing is performed on a surface of the recording paper according to the present embodiment on the print receiving layer side, a color material such as pigment or dye typically stays on the surface layer of the print receiving layer and produces color. On the other hand, the ink solvent passes through the print receiving layer to the lower layer (liquid-absorptive layer).

<Thermoplastic resin>

Examples of the thermoplastic resin used for the print receiving layer include an olefin-type polymer, polyamide, polyester, polycarbonate, polystyrene, poly(meth)acrylate, polyvinyl chloride, and a mixture of any of these resins. Among them, an olefin-type polymer is preferable from the viewpoint of excellent water resistance and solvent resistance.

As the olefin-type polymer, a propylene-type polymer, an ethylene-type polymer and the like can be preferably used.

Examples of the propylene-type polymer include a propylene homopolymer obtained by homopolymerization of propylene, such as isotactic homopolypropylene and syndiotactic homopolypropylene, and a propylene copolymer obtained by using propylene as a main component, which is copolymerized with an $\alpha$-olefin such as ethylene, 1-butene, 1-hexene, 1-heptene, 1-octene or 4-methyl-1-pentene. The propylene copolymer may be a binary copolymer, or a ternary or higher multicomponent copolymer. The propylene copolymer may be either a random copolymer or a block copolymer.

Examples of the ethylene-type polymer include high-density polyethylene, medium-density polyethylene, linear low-density polyethylene, a copolymer obtained by using ethylene as a main component, which is copolymerized with an $\alpha$-olefin such as propylene, butene, hexene, heptane, octene or 4-methylpentene-1, a maleic acid-modified ethylene/vinyl acetate copolymer, an ethylene/vinyl acetate copolymer, an ethylene/acrylic acid copolymer, an ethylene/acrylic acid alkyl ester copolymer, an ethylene/methacrylic acid alkyl ester copolymer, a metal salt of an ethylene/methacrylic acid copolymer (the metal is zinc, aluminum, lithium, sodium, potassium or the like), an ethylene-cyclic olefin copolymer, maleic acid (anhydride)-modified polyethylene, and maleic acid (anhydride)-modified polypropylene. Here, the term "maleic acid (anhydride)" refers to both maleic anhydride and maleic acid.

Among the olefin-type polymers, a propylene homopolymer, i.e., polypropylene, or high-density polyethylene is preferable from the viewpoint of improving moldability, the viewpoint of reducing cost, and the viewpoint of suppressing warpage caused by solvent ink. From the viewpoint of optimizing the pore forming property and the filler binding property, maleic acid (anhydride)-modified polyethylene or maleic acid (anhydride)-modified polypropylene is preferable.

The thermoplastic resins may be used alone, or in combination of two or more thereof.

<Filler>

Examples of the filler include inorganic particles and organic particles.

The inorganic particles and the organic particles may be used alone, or used in combination. When a resin composition containing a filler and a thermoplastic resin is stretched, a large number of fine pores with particles as nuclei can be formed inside the stretched layer. Thereby, the porous layer can be obtained.

From the viewpoint of decreasing the amount of resin used, so that a load on the environment is reduced, and the viewpoint of optimizing the pore forming property, the content of the filler in the print receiving layer is preferably 45 mass% or more, and more preferably 50 mass% or more. On the other hand, from the viewpoint of suppressing generation of surface defects, the content of the filler in the print receiving layer is preferably 75 mass% or less, and more preferably 65 mass% or less. When the content of the filler in the print receiving layer is 45 mass% or more, the porosity can be increased to facilitate permeation of ink into the absorptive layer, leading to enhancement of the liquid-absorptive capacity. When the content of the filler is 75 mass% or less, the porosity and the liquid absorption rate can be inhibited from becoming excessively large.

From the viewpoint of obtaining a suitable pore forming property and the viewpoint of controlling the liquid absorption rate, the average particle size of the filler contained in the print receiving layer is preferably 0.1 μm or more, and more preferably 0.2 μm or more. From the same viewpoint, the average particle size of the filler is preferably 5 μm or less, more preferably 3 μm or less, and further more preferably 0.9 μm or less. When the average particle size of the filler is 0.1 μm or more, the porosity of the porous layer is easily increased to enhance permeability to ink. When the average particle size of the filler is 5 μm or less, formation of coarse pores is easily suppressed to enhance the sharpness of ink-jet-printed images, and surface strength is easily maintained. Here, the average particle size of the filler refers to an average primary particle size (D50). This is a volume-based median diameter measured by a laser diffraction/scattering method.

<<Inorganic particle>>

The inorganic particle is not limited, and examples thereof include heavy calcium carbonate, light calcium carbonate, baked clay, talk, titanium oxide, barium sulfate, alumina, silica, zinc oxide, zeolite, mica, a glass fiber, and a hollow glass bead. Among them, heavy calcium carbonate, baked clay, diatomaceous earth and the like are preferable because they are inexpensive, allow a large number of pores to be easily formed by stretching the resin composition forming the porous layer, and ensure easy adjustment of the porosity. In particular, heavy calcium carbonate or light calcium carbonate is preferable because its average particle size and particle size distribution are easily adjusted to fall within a range which allows pores to be easily formed. The inorganic particles may be used alone, or in combination of two or more thereof.

<<Organic particle>>

The organic particle is not limited, but is preferably an organic particle which is not compatible with the thermoplastic resin, has a higher melting point or glass transition temperature over the thermoplastic resin, and is finely dispersed under conditions for melting and kneading the thermoplastic resin. For example, when an olefin-type resin is used as the thermoplastic resin contained in the print receiving layer, it is preferable to select and use a resin which is polyethylene terephthalate, polybutylene terephthalate, polycarbonate, nylon-6, nylon-6,6, a cyclic olefin homopolymer, a copolymer of a cyclic olefin and ethylene, or the like and which has a melting point of 120 to 300°C or a glass transition temperature of 120 to 280°C.

<<Filler having a hydrophobized surface>>

The print receiving layer preferably contains a filler having a hydrophobized surface as a filler, and may contain only a filler having a hydrophobized surface as a filler. The filler having a hydrophobized surface is preferably an inorganic particle or an organic particle having a surface hydrophobized with paraffin, or a fatty acid having 12 to 22 carbon atoms, or a salt thereof, and more preferably an inorganic particle or an organic particle having a surface hydrophobized with a fatty acid having 12 to 22 carbon atoms, or a salt thereof. When the print receiving layer contains a filler having a hydrophobized surface, formation of coarse pores and pores with an excessive porosity can be suppressed to inhibit the liquid absorption rate from becoming excessively high.

As the fatty acid having 12 to 22 carbon atoms for obtaining a hydrophobized surface, for example, lauric acid, myristic acid, palmitic acid, stearic acid, arachidic acid, behenic acid, oleic acid, linoleic acid, linolenic acid, and eleostearic acid can be exemplified.

The method for the surface treatment is not limited, and can be carried out by, for example, introducing an aqueous solution of a treatment agent into a slurry of inorganic particles or organic particles. This enables the obtainment of surface-treated inorganic particles or organic particles, i.e., inorganic particles or organic particles having, on surfaces thereof, a surface treatment layer containing paraffin, or a fatty acid having 12 to 22 carbon atoms, or a salt thereof.

As a filler contained in the print receiving layer, a non-treated filler which has not been subjected to surface treatment, or a filler having a hydrophilized surface may be used in combination as long as the effects of the present invention are not impaired. In this case, the content of the filler having a hydrophobized surface, in the filler contained in the print receiving layer is preferably 50 mass% or more, more preferably 60 mass% or more, further more preferably 70 mass% or more, even more preferably 80 mass% or more, and particularly preferably 90 mass% or more. All fillers contained in the print receiving layer may be fillers having a hydrophobized surface.

<Other components>

The print receiving layer may arbitrarily contain common additives if necessary. Examples of the additive include common auxiliary agents such as an antioxidant, a light stabilizer, an ultraviolet absorber, a filler dispersing agent, a nucleating agent, an anti-blocking agent, a plasticizer, a slipping agent such as a fatty acid amide, dye, pigment, a release agent and a flame retardant.

Preferably, the substrate layer contains an antioxidant agent, a light stabilizer and the like from the viewpoint of enhancing outdoor durability.

Examples of the antioxidant include a sterically hindered phenol-type antioxidant, a phosphorus antioxidant, and an amine-type antioxidant.

Examples of the light stabilizer include a sterically hindered amine-type light stabilizer, a benzotriazole-type light stabilizer, and a benzophenone-type light stabilizer.

The content of the antioxidant and the light stabilizer is preferably 0.001 to 1 mass% with respect to the substrate layer.

The print receiving layer is a porous layer, and the porosity thereof is preferably 32% or more, more preferably 34% or more, and further more preferably 35% or more. The porosity of the print receiving layer is 50% or less, and more preferably 45% or less. When the porosity is in the above-mentioned range, both the liquid absorption rate and the surface strength are easily secured, which is preferable. A cross-section of a layer of interest is observed with a scanning electron microscope, the observation image is captured in an image analysis device, and image analysis is performed on the observation region to calculate an area ratio of pores on the cross-section, which can be determined as the porosity.

The grammage of the print receiving layer is preferably 1 g/m$^2$ or more, more preferably 1.5 g/m$^2$ or more, and further more preferably 2 g/m$^2$ or more. The grammage of the print receiving layer is preferably 15 g/m$^2$ or less, more preferably 12 g/m$^2$ or less, and further more preferably 10 g/m$^2$ or less. When the grammage is in the above-mentioned range, the liquid absorption rate is easily adjusted to an intended level, which is preferable.

From the viewpoint of inhibiting the liquid absorption rate from becoming excessively low, the average pore size of the print receiving layer is preferably 0.5 $\mu$m or more, more preferably 0.7 $\mu$m or more, and further more preferably 0.8 $\mu$m or more. On the other hand, from the viewpoint of suppressing deterioration of sharpness due to sinking of the ink pigment, the average pore size of the print receiving layer is preferably 20 $\mu$m or less, more preferably 14 $\mu$m or less, and further more preferably 7 $\mu$m or less. The average pore size of the print receiving layer is determined by the same image analysis as in determination of the porosity.

(Liquid-absorptive layer)

The liquid-absorptive layer is a layer that absorbs ink which has passed through the print receiving layer. The liquid-absorptive layer is preferably in contact with the print receiving layer. The liquid-absorptive layer is a porous layer containing a thermoplastic resin, which is preferably a stretched layer containing a filler. That is, the liquid-absorptive layer is preferably a stretched layer containing a thermoplastic resin and a filler.

<Thermoplastic resin>

Examples of the thermoplastic resin to be used for the liquid-absorptive layer include thermoplastic resins that are the same as described in the section "Print receiving layer". Among them, preferred ones are also the same as described above.

<Filler>

Fillers that are the same as described in the section "Print receiving layer" can be used for the liquid-absorptive layer. However, the filler to be used for the liquid-absorptive layer may, or is not required to, have the above-described hydrophilized and/or hydrophobized surface. From the viewpoint of obtaining a desired liquid-absorptive capacity, the filler to be used for the liquid-absorptive layer is preferably one that has not been subjected to surface treatment.

The filler content in the liquid-absorptive layer is preferably 45 to 70 mass%, and more preferably 50 to 65 mass%. When the filler content is equal to or greater than the lower limit value described above, the liquid absorptive layer is likely to have a sufficient pore content. On the other hand, from the viewpoint of obtaining a suitable layer stretch property and the viewpoint of obtaining a suppressive effect on surface defects, the filler content is preferably equal to or smaller than the upper limit value described above.

<Other components>

Like the print receiving layer, the liquid-absorptive layer may also contain arbitrary other components such as the above-described various additives.

The thickness and the porosity of the liquid-absorptive layer are only required to be adjusted so that the liquid-absorptive capacity from the print receiving layer is 10 cc/m$^2$ or more. A layer having a high porosity may be thinly provided, or a layer that does not so high porosity may be thickly provided. From the viewpoint of enhancing the interconnectivity to secure a capacity enabling liquid absorption, the porosity of the liquid-absorptive layer is preferably 40% or more, and more preferably 45% or more. On the other hand, from the viewpoint of enhancing productivity, the porosity is preferably 60% or less.

The grammage of the liquid-absorptive layer is preferably 5 g/m$^2$ or more, more preferably 10 g/m$^2$ or more, further more preferably 15 g/m$^2$ or more, even more preferably 19 g/m$^2$ or more, and particularly preferably 21 g/m$^2$ or more. The grammage of the liquid-absorptive layer is preferably 50 g/m$^2$ or less, more preferably 40 g/m$^2$ or less, and further more preferably 37.5 g/m$^2$ or less. When the grammage is in the above-mentioned range, the liquid-absorptive capacity is easily adjusted to an intended level, which is preferable.

(Support layer)

In the recording paper according to the present embodiment, a support layer may be laminated on the liquid-absorptive layer on a side opposite to the print-receiving layer. When the recording paper comprises such a support layer, an appropriate thickness can be imparted to the recording paper, and toughness suitable for printing can be imparted. That is, by adjusting the thickness of the support layer, the thickness of the recording paper can be adjusted, toughness suitable for printing can be imparted, and opacity and paper feeding/ejection properties can be adjusted. From the viewpoint of obtaining sufficient toughness, the thickness of the support layer is preferably 15 μm or more, more preferably 20 μm or more, and further more preferably 30 μm or more. From the viewpoint of improving handleability during printing, the thickness of the support layer is preferably 400 μm or less, more preferably 300 μm or less, and further more preferably 200 μm.

The support layer may be a single layer, or a laminate of two or more layers.

The material for forming the support layer is not limited. For example, the support layer is preferably a thermoplastic resin layer excellent in water resistance. As the thermoplastic resin, resins that are the same as described in the section "Print receiving layer" can be used. The support layer may contain a filler like the print receiving layer and the liquid-absorptive layer, and the support layer may be a porous layer. The support layer may also contain arbitrary other components such as the above-described additives.

(Back surface layer)

The back surface layer is preferably provided on a surface of the support layer on a side opposite to the print receiving layer. The back surface layer has a function of promoting evaporation of the solvent from the receiving layer after printing to suppress the waviness of a paper surface by the solvent mainly when recording papers are stored in a state of being stacked one on another.

For the back surface layer, the same material as that of the print receiving layer can be used. However, from the viewpoint of optimizing the surface roughness and the static friction coefficient, the content of the filler (the total amount of an inorganic filler and an organic filler if they are used in combination) in the back surface layer is preferably 5 to 60 mass%, and more preferably 10 to 50 mass%.

The thickness of the back surface layer can be appropriately determined according to the thickness of the support layer described above. From the viewpoint of attaining appropriate surface roughness, the thickness of the back surface layer is preferably 1 to 50 μm, more preferably 1 to 20 μm, and further preferably 2 to 10 μm.

The porosity of the back surface layer is preferably 5 to 60%, more preferably 5 to 50%, and more preferably 10 to 40%. Due to the presence of pores, there is a tendency that control can be performed to make the surface roughness of the back surface layer fall within a predetermined range.

It is also possible to further provide a coating layer on a surface of the back surface layer. The coating layer may contain an anchoring agent, a polymeric antistatic agent and the like. When the coating layer contains an anchoring agent, there is a tendency that in the case where an ink-jet-printed layer is provided on the coating layer, adhesion between the coating layer and the ink-jet-printed layer can be improved. When the coating layer contains an antistatic agent, there is a tendency that antistatic performance on the back surface layer side can be improved. Examples of the anchoring agent include a polyimine-type polymer, and an ethyleneimine adduct of polyamine polyamide. Examples of the polymeric antistatic agent include those having an ammonium salt structure and a phosphonium salt structure. When the anchoring agent and the antistatic agent are used in combination, their ratio on a solid content basis is such that the content of the antistatic agent is preferably 0 to 200 parts by mass, more preferably 20 to 150 parts by mass, and further more preferably 30 to 100 parts by mass per 100 parts by mass per 100 parts by mass of the anchoring agent, from the viewpoint of sufficiently exhibiting the performance of each component.

[Characteristics of recording paper]

(Stiffness)

The recording paper is also suitably used for posted notices such as posters, and in the case of use for posted notices, the recording paper preferably has a certain degree of rigidity from the viewpoint of ease of handling during attachment. The stiffness of the recording paper is preferably 0.3 mN or more, more preferably 0.4 mN or more, and further more preferably 0.5 mN or more. On the other hand, the stiffness of the recording paper is preferably 10 mN or less, more preferably 5 mN or less, and further more preferably 3 mN or less. When the stiffness of the recording paper is within the above-described range, the recording paper has toughness in itself, and is easy to handle. There is a tendency that wrinkles are hardly generated in, for example, attachment to a material to be attached. Further, there is a tendency that waviness after printing can be suppressed.

The stiffness in the present embodiment is based on the bending repulsion method A (Gurley method) under JIS L1096: 2010.

A specific method for measuring the stiffness of the recording paper by the Gurley method will be described in Examples described later.

(Glossiness)

The glossiness of a surface of the recording paper on the print receiving layer side is preferably 50% or more, more preferably 60% or more, and further more preferably 70% or more. When the glossiness of the surface on the print receiving layer side is equal to or greater than the above-described lower limit value, it can be said that a glossiness which is at least sufficiently higher than that of a recording paper with a pigment coating or the like is obtained, and the image tends to have sharpness and an improved appearance.

The glossiness in the present embodiment is based on the glossiness under JIS P 8142: 1993.

A specific method for measuring the glossiness of a surface of the recording paper on the print receiving layer side will be described in Examples described later.

(Surface strength)

The surface strength on the print receiving layer side is preferably 0.7 kgf/cm or more, more preferably 0.9 kgf/cm or more, and further more preferably 1.0 kgf/cm or more. On the other hand, the surface strength of the receiving layer may be 2.0 kgf/cm or less, 1.5 kgf/cm or less, or 1.2 kgf/cm or less. When the surface strength on the print receiving layer side is within the above-described range, the recording paper posted outdoors hardly suffers from the scraping of a surface on the print receiving layer side by sand or the like, and exhibits high weather resistance, so that there is a tendency that printed pictures can be maintained for a long period of time.

A specific method for measuring the surface strength on the print receiving layer side will be described in Examples described later.

(Smoothness)

From the viewpoint that the image has sharpness and an improved appearance, the smoothness of a surface on the print receiving layer side is preferably 1,000 seconds or more, more preferably 1,300 seconds or more, and further more preferably 1,800 seconds or more. On the other hand, from the viewpoint of suppressing blocking after cutting, the smoothness of a surface on the print receiving layer side is preferably 10,000 seconds or less, more preferably 9,000 seconds or less, and further more preferably 8,000 seconds or less.

A specific method for measuring the smoothness of the surface on the print receiving layer side will be described in Examples described later.

[Production method]

The method for producing the recording paper of the present invention is not limited, and examples thereof include the following methods. For example, when the recording paper comprises a print receiving layer, a liquid-absorptive layer, a support layer and a back surface layer, a thermoplastic resin film for forming the support layer may be formed, after which a laminated resin film for forming the print receiving layer and the liquid-absorptive layer is laminated onto one surface of the support layer, and the back surface layer is laminated onto the other surface. In this case, a laminated resin film may be formed by co-extruding the print receiving layer and the liquid-absorptive layer onto one surface of the support layer by a multilayer die method using a feed block and a multi-manifold, extruding the back surface layer onto the other surface, and then performing co-stretching to make these layers porous, or a laminated resin film may be formed by extrusion-laminating one layer to a surface of the other layer with a plurality of dies, and stretching the laminate to make both the layers porous.

The support layer, the liquid-absorptive layer, the print receiving layer and the back surface layer may be all co-extruded, followed by co-stretching, or the support layer, the liquid-absorptive layer and the back surface layer may be co-extruded, after which the print receiving layer is extrusion-laminated to the surface of the liquid-absorptive layer, followed by co-stretching, or the support layer, the liquid-absorptive layer and the print receiving layer may be co-extruded, after which the back surface layer is extrusion-laminated to the surface of the support layer, followed by co-stretching, or the support layer and the liquid-absorptive layer may be co-extruded, after which the print receiving layer is extrusion-laminated to the surface of the liquid-absorptive layer and the back surface layer is extrusion-laminated to the surface of the support layer, followed by co-stretching, or the liquid-absorptive layer and the print receiving layer may be made porous and laminated to a support in parallel by extrusion-laminating the liquid-absorptive layer and the print receiving layer onto one surface of the support layer and extrusion-laminating the back surface layer onto the other surface of the support layer, followed by co-stretching. Production using the method in which coextrusion and/or coextrusion lamination are performed, followed by co-stretching is preferable because the process is simple and production cost is reduced. As the stretching method, a common methos can be utilized.

Examples of the method for stretching a film include a longitudinal stretching method using a difference in peripheral speed between rolls, a lateral stretching method using a tenter oven, a sequential biaxial stretching method comprising a combination of these methods, a rolling method, a simultaneous biaxial stretching method using a combination of a tenter oven and a pantograph, and a simultaneous biaxial stretching method using a combination of a tenter oven and a linear motor. It is also possible to use, for example, a simultaneous biaxial stretching (inflation molding) method in which a molten resin is extrusion-molded into a tube shape using a circular die connected to a screw extruder, and air is then blown into the molded product. When a substrate of multilayer structure including a plurality of stretched films is produced, the layers may be individually stretched before being laminated, or may be collectively stretched after being laminated. The stretched layers may be stretched again after being laminated.

When the thermoplastic resin used for a layer stretched is an amorphous resin, the stretching temperature is preferably in a range equal to or higher than the glass transition point temperature of the thermoplastic resin. When the thermoplastic resin is a crystalline resin, the stretching temperature is preferably within a range equal to or higher than the glass transition point of the amorphous portion of the thermoplastic resin and equal to or lower than the melting point of the crystalline portion of the thermoplastic resin, specifically a temperature lower by 2 to 60°C than the melting point of the thermoplastic resin. When the stretching temperature is lower than the melting point of the thermoplastic resin by 2°C or more, preferably 10°C or more, and more preferably by 20°C or more, control can be performed to make the porosity or pore size larger, and control can be performed to make the liquid-absorptive capacity and liquid absorption rate large, which is preferable.

In the case of uniaxial stretching, the draw ratio is typically 1.2 or more, preferably 2 or more, and typically 10 or less, preferably 5 or less. The draw ratio in the case of biaxial stretching is such that the area draw ratio is typically 1.5 or more, preferably 4 or more, and typically 20 or less, preferably 12 or less.

When the draw ratio is within the above-described range, there is a tendency that stretch molding can be performed with stability. Even in the case where a resin composition containing a thermoplastic resin and a filler is used, when the draw ratio is within the above-described range, an intended porosity can be obtained, opacity is easily improved, and breakage of the film is unlikely to occur.

The above-described coating solution for forming a coating layer is applied to the stretched laminated resin film, and dried, whereby a coating layer can be formed.

(Printing)

In the recording paper according to the present embodiment, printing can be performed on a surface on the print receiving layer side. The method of printing performed on the print receiving layer is not limited. It is possible to perform various kinds of common plate-based printing such as gravure printing, offset printing, flexographic printing, sticker printing and screen printing, and digital printing and melt thermal transfer printing with various printers based on the ink-jet method, the electrophotographic method or the liquid toner method.

For printing, any of various inks such as ultraviolet curable ink, oil-based ink, oxidation polymerization curable ink, melt thermal transfer recording ink, water-based ink, solvent ink, powder toner and liquid toner (Electroink) can be used according to a printing method.

In particular, the recording paper according to the present embodiment is used preferably for ink-jet printing, more preferably for ink-jet printing using water-based ink or solvent ink, and particularly preferably for ink-jet printing using solvent ink. The recording paper according to the present embodiment, which comprises a print receiving layer, a liquid-absorptive layer and a specified coating layer and in which the liquid absorption rate is in a specific range and the liquid-absorptive capacity is equal to or greater than a specific value, thus is excellent in print quality, drying property and weather resistance.

The solvent-based ink typically contains a solvent, and a color material specific to solvent-based ink. Examples of the solvent to be used for solvent-based ink include glycol ether-type solvents such as polyoxyethylene glycol dialkyl ether, polyoxyethylene glycol monoalkyl ether and polypropylene glycol monoalkyl ether. Examples of the color material to be used for solvent-based ink include oil-soluble dyes such as naphthol dye, azo dye, metal complex dye, anthraquinone dye, quinoneimine dye, indigo dye, cyanine dye, quinoline dye, nitro dye, nitroso dye, benzoquinone dye, carbonium dye, naphthoquinone dye, naphthalimide dye, phthalocyanine dye and perinone dye. As the pigment, carbon black and various pigments are used. Examples of the organic pigments include non-soluble azo pigment, condensed azo pigment, chelate azo pigment, perinone pigment, nitro pigment, nitroso pigment, perylene pigment, and aniline black.

Examples

Hereinafter, the present invention will be described in more detail by showing Examples, which should not be construed as limiting the present invention.

(Production Example 1: Production of hydrophilized calcium carbonate)

A reactor equipped with a reflux condenser, a thermometer, a dropping funnel, a stirrer and a gas inlet tube was charged with 500 parts by mass of a diallylamine hydrochloric acid salt (aqueous solution at a concentration of 60%), 13 parts by mass of acrylamide (aqueous solution at a concentration of 40%) and 40 parts by mass of water, and heated to a system temperature of 80°C while nitrogen gas was introduced into the reactor. Using the dropping funnel, 30 parts by mass of ammonium persulfate (aqueous solution at a concentration of 25%) as a polymerization initiator was added dropwise with stirring over 4 hours. After completion of the dropwise addition, the reaction was continued for 1 hour to obtain a viscous pale yellow liquid material. 50 parts by mass of the material was taken, and poured into 500 parts by mass of acetone to generate a white precipitate. The precipitate was separated by filtration, thoroughly washed with 100 parts by mass of acetone twice, and then dried under vacuum to obtain a white solid polymer (water-soluble cationic copolymer). The obtained polymer had a weight average molecular weight of 55,000 as determined by GPC.

Subsequently, 40 mass% of heavy calcium carbonate (average particle size: 8 $\mu$m, manufactured by Nihon Cement Co., Ltd., dry-ground product) and 60 mass% of water were thoroughly stirred and mixed to form a slurry, 0.06 parts by mass of the water-soluble cationic copolymer produced as described above was added per 100 parts by mass of heavy calcium carbonate, and the mixture was wet-ground using a desktop Atritor medium stirring mill (glass beads with a diameter of 1.5 mm, filling factor: 170%, peripheral speed: 10 m/sec).

Subsequently, 50 parts by mass of a mixture containing, as main components, a sodium alkyl sulfonate having 14 carbon atoms and a sodium alkyl sulfonate having 16 carbon atoms (aqueous solution at a concentration of 2 mass%) was added, and the mixture was stirred. Thereafter, the mixture was classified through a 350 mesh screen, a slurry that had passed through the 350 mesh was dried by a medium fluidized drying machine (MSD-200 manufactured by Nara Machinery Co., Ltd.). The obtained calcium carbonate had an average primary particle size of 1.5 $\mu$m as measured by Microtrac (manufactured by Nikkiso Co., Ltd.).

(Production Example 2: Production of hydrophobized calcium carbonate)

Water was added to 500 parts by mass of synthetic calcium carbonate (light calcium carbonate) having a BET specific surface area of 16 m$^2$/g, and the mixture was stirred at 40°C to prepare a calcium carbonate slurry having a solid content of 10 mass%. Next, a 10 mass% aqueous solution of sodium laurate at 90°C was prepared, and the prepared solution and the calcium carbonate slurry were mixed and stirred to make the calcium carbonate have a hydrophobized surface. The calcium carbonate slurry having a hydrophobized surface was dried to a solid content of 60%. Thereafter, using a drying machine, water was removed to obtain calcium carbonate having a hydrophobized surface. The obtained calcium carbonate had an average primary particle size of 0.23 $\mu$m as measured by performing ultrasonic dispersion for 60 seconds under the condition of 300 $\mu$A using an ultrasonic disperser Model US-300T (manufactured by Nippon Seiki Co., Ltd.), and ethanol as a solvent.

(Resin Composition)

The materials were stirred and mixed with a mixer so as to meet the formulation (parts by mass) shown in Table 1, and an extrusion step was then carried out to obtain resin compositions a to h. In Table 1, the term "MFR" means a melt flow rate. The blank column in Table 1 means that the compounding ratio is 0 parts by mass.

[Table 1]

| Table 1 | | | | | | | | | | |
|---|---|---|---|---|---|---|---|---|---|---|
| Material No. | Material | Resin composition compounding ratio (parts by mass) | | | | | | | | |
| | | a | b | c | d | e | f | g | h |
| 1 | Propylene homopolymer (manufactured by Japan Polypropylene Corporation, trade name: NOVATEC PP FY6, MFR (230°C, load: 2.16 kg): 2.5 g/10 min, melting point: 165°C) | 80 | 100 | 20 | 30 | 47 | 45 | 45 | |
| 2 | Propylene homopolymer (manufactured by Japan Polypropylene Corporation, trade name: NOVATEC PP MA3, MFR(230°C, load: 2.16 kg): 11 g/10 min, melting point: 165°C) | | | 20 | 30 | | | | |
| 3 | Heavy calcium carbonate (manufactured by BIHOKU FUNKA KOGYO CO., LTD., trade name: SOFTON 1800, average particle size: 1.2 um) | | | 60 | 40 | | | | |
| 4 | Hydrophilized calcium carbonate (Production Example 1) | | | | | | 25 | 55 | |
| 5 | Hydrophobized calcium carbonate (Production Example 2) | 20 | | | | 53 | 30 | | |
| 6 | Vinyl chloride copolymer (manufactured by KURARAY CO., LTD, trade name: SEPTON 2004F, MFR(230°C, load: 2.16 kg): 5.0 g/10 min) | | | | | | | | 100 |

(Coating composition)

The materials were mixed so as to meet the formulation (solid content ratios, parts by mass) shown in table 2, thereby obtaining coating compositions (coating solutions) a to d. The blank column in Table 2 means that the solid content ratio is 0 parts by mass.

[Table 2]

Table 2

| Material No. | Material | | | Coating composition Solid content ratio (parts by mass) | | | |
|---|---|---|---|---|---|---|---|
| | | | | a | b | c | d |
| 1 | Aqueous binder | Water-dispersible resin | Cationic aqueous polyurethane resin emulsion (trade name: HYDRAN CP-7050, manufactured by DIC Corporation, solid content concentration: 25 mass%, average dispersed particle size: 0.08 $\mu$m, minimum film formation temperature: 0°C) | | 4 | | 4 |
| 2 | | Water-soluble resin | Butyl-modified polyethyleneimine (trade name: SAFTOMER AC-72 manufactured by Mitsubishi Chemical Corporation) | 0.4 | | | |
| 3 | Antistatic agent | | Quaternary nitrogen-containing acrylic resin (trade name: SAFTOMER ST-3200 manufactured by Mitsubishi Chemical Corporation) | 0.5 | 0.4 | | |

(continued)

| Material No. | Material | | Coating composition Solid content ratio (parts by mass) | | | |
|---|---|---|---|---|---|---|
| | | | a | b | c | d |
| 4 | Cross-linker | Epichlorohydrin adduct of polyamine polyamide (trade name: WS-4082, manufactured by Seiko PMC Corporation) | 0.5 | | | |
| 5 | Inorganic filler | Silica fine powder "MIZUKASIL P-78F" manufactured by MIZUSAWA INDUSTRIAL CHEMICALS, LTD., average particle size: 12.5 $\mu$m | | | 20 | |
| 6 | | Acrylic resin emulsion "ACRONAL YJ-2870D" manufactured by BASF Japan Ltd., solid content concentration: 50 mass% | | | 13 | |

(Example 1)

The resin composition as shown in Table 1 was melted and kneaded in an extruder set at 230°C, was then supplied to an extrusion die set at 250°C, and was extruded into a sheet shape, and cooled to 60°C by a cooling apparatus to obtain an unstretched sheet. The unstretched sheet was heated to 140°C, and stretched at a ratio of 5 in a longitudinal direction using a difference in peripheral speed between rolls. Subsequently, the resin compositions c and e were melted and kneaded in an extruder set at 230°C, and were then extruded into a sheet shape such that the resin composition c was in contact with the stretched sheet, thereby being laminated to a first surface of the stretched sheet. At the same time, the resin composition a was melted and kneaded in one extruder set at 230°C, and was then extruded into a sheet shape, and laminated to a second surface of the stretched sheet to obtain a four-layered laminated sheet. Subsequently, the four-layered laminated sheet was cooled to 60°C, and the four-layered laminated sheet was heated to about 155°C and stretched at a ratio of 9 in a lateral direction using a tenter oven, and then heated to 160°C, thereby being heat-treated. Subsequently, the sheet was cooled to 60°C, and subjected to edge cutting to obtain a laminated resin film with a thickness of 120 $\mu$m in which the print receiving layer, the liquid-absorptive layer, the support layer and the back surface layer are composed of resin compositions e, c, a and a, respectively, have thicknesses of 2 $\mu$m, 42 $\mu$m, 46 $\mu$m and 30 $\mu$m, respectively, and are stretched in one axis, one axis, two axes and one axis, respectively. A coating composition was applied to a surface of the laminated resin film such that the coating mass after drying was 0.15 g/m$^2$. The coating film was dried in an oven at 60°C to form a coating layer, thereby obtaining a recording paper of Example 1.

(Examples 2 to 11, 13 and 14)

Except that the types of resin compositions and coating compositions used, and the stretching conditions were changed as shown in Table 3, the same procedure as in Example 1 was carried out to obtain recording papers of Examples 2 to 11, 13 and 14. In Examples 2 to 11, 13 and 14, the support layer and the back surface layer each have the same thickness as in Example 1.

(Example 12)

The resin composition as shown in Table 1 was melted and kneaded in an extruder set at 230°C, was then supplied to an extrusion die set at 250°C, and was extruded into a sheet shape, and cooled to 60°C by a cooling apparatus to obtain an unstretched sheet. Subsequently, the resin compositions c and e were melted and kneaded in an extruder set at 230°C, and were then extruded into a sheet shape such that the resin composition c was in contact with the unstretched sheet, thereby being laminated to a first surface of the unstretched sheet. At the same time, the resin composition a was melted and kneaded in one extruder set at 230°C, and was then extruded into a sheet shape, and laminated to a second surface of the unstretched sheet to obtain a four-layered laminated sheet. Subsequently, the four-layered laminated sheet was cooled to 60°C, and the four-layered laminated sheet was heated to about 155°C and stretched at a ratio of 9 in a lateral direction using a tenter oven, and then heated to 160°C, thereby being heat-treated. Subsequently, the sheet was cooled to 60°C, and subjected to edge cutting to obtain a laminated resin film with a thickness of 120 $\mu$m in which the print receiving layer, the liquid-absorptive layer, the support layer and the back surface layer are composed of resin compositions e, c, a and a, respectively, have thicknesses of 2 $\mu$m, 42 $\mu$m, 46 $\mu$m and 30 $\mu$m, respectively, and are all stretched in one axis. A coating composition was applied to a surface of the laminated resin film such that the coating mass after drying was 0.15 g/m$^2$. The coating film was dried in an oven at 60°C to form a coating layer, thereby obtaining a recording paper of Example 12.

(Comparative Example 1)

The resin composition as shown in Table 1 was melted and kneaded in an extruder set at 230°C, was then supplied to an extrusion die set at 250°C, and was extruded into a sheet shape, and cooled to 60°C by a cooling apparatus to obtain an unstretched sheet. The unstretched sheet was heated to 140°C, and stretched at a ratio of 5 in a longitudinal direction using a difference in peripheral speed between rolls, thereby obtaining a uniaxially stretched single-layered sheet. Subsequently, the resin composition a was melted and kneaded in one extruder set at 230°C, and was then extruded into a sheet shape, and laminated to a second surface of the stretched sheet to obtain a two-layered laminated sheet. Subsequently, the two-layered laminated sheet was cooled to 60°C, and the two-layered laminated sheet was heated to about 155°C and stretched at a ratio of 9 in a lateral direction using a tenter oven, and then heated to 160°C, thereby being heat-treated. Subsequently, the sheet was cooled to 60°C, and subjected to edge cutting to obtain a laminated resin film with a thickness of 100 $\mu$m in which the support layer and the back surface layer are both composed of the resin composition a, have thicknesses of 70 $\mu$m and 30 $\mu$m, respectively, and are stretched in two axes and one axis, respectively.

Meanwhile, 55 parts by mass of water, 20 parts by mass of silica fine powder ["MIZUKASIL P-78F" manufactured by MIZUSAWA INDUSTRIAL CHEMICALS, LTD., average particle size: 12.5 $\mu$m], and 25 parts by mass of a hydrophobic resin (acrylic resin emulsion) ["ACRONAL YJ-2870D" manufactured by BASF Japan Ltd., solid content concentration: 50 mass%] were mixed, and dispersed to prepare a coating layer composition c.

A coating composition was applied to one surface of the laminated resin film obtained as described above, and dried to provide a 20 $\mu$m-thick coating layer on the surface, and the film was dried in an oven at 70°C for 60 seconds to obtain a recording paper of Comparative Example 1 with a thickness of 120 $\mu$m.

(Comparative Example 2)

The resin composition h shown in Table 1 was kneaded and rolled for 5 minutes with two 9-inch test rolls (manufactured by Nishimura Koki Company, steam heating type) set at 160°C, thereby preparing a vinyl chloride-type resin sheet with a thickness of 140 $\mu$m (calendering). The obtained vinyl chloride-type resin sheet was pressed by application of a pressure of up to 70 kg/cm$^2$ with a 37t hydraulic molding machine (manufactured by Oji Machine Co., Ltd.) at a temperature of 170°C to provide a mirror-finished surface, thereby obtaining a recording paper of Comparative Example 2 with a thickness of 140 $\mu$m.

(Comparative Example 3)

The resin composition as shown in Table 1 was melted and kneaded in an extruder set at 230°C, was then supplied to an extrusion die set at 250°C, and was extruded into a sheet shape, and cooled to 60°C by a cooling apparatus to obtain an unstretched sheet. Subsequently, the resin compositions c and e were melted and kneaded in an extruder set at 230°C, and were then extruded into a sheet shape such that the resin composition c was in contact with the unstretched sheet, thereby being laminated to a first surface of the unstretched sheet. At the same time, the resin composition a was melted and kneaded in one extruder set at 230°C, and was then extruded into a sheet shape, and laminated to a second surface of the unstretched sheet to obtain a four-layered laminated sheet. Subsequently, the sheet was cooled to 60°C, and subjected to edge cutting to obtain a laminated resin film with a thickness of 71 $\mu$m in which the print receiving layer, the liquid-absorptive layer, the support layer and the back surface layer are composed of resin compositions e, c, a and a, respectively, have thicknesses of 1 $\mu$m, 20 $\mu$m, 25 $\mu$m and 25 $\mu$m, respectively, and are all unstretched. A coating composition was applied to a surface of the laminated resin film such that the coating mass after drying was 0.15 g/m$^2$. The coating film was dried in an oven at 60°C to form a coating layer, thereby obtaining a recording paper of Comparative Example 3.

(Comparative Example 4)

Except that a coating layer was not applied, the same procedure as in Example 1 was carried out to obtain a recording paper of Comparative Example 4.

(Comparative Examples 5 to 7)

Except that the types of resin compositions and coating compositions used, and the stretching conditions were changed as shown in Table 3, the same procedure as in Example 1 was carried out to obtain recording papers of Comparative Examples 5 to 7. In Comparative Examples 5 to 7, the support layer and the back surface layer each have the same thickness as in Example 1.

(Evaluation)

The following measurements were made on the recording papers obtained in Examples and Comparative Examples. Table 3 shows the results.

(Liquid-absorptive capacity)

The liquid-absorptive capacity of the recording paper was measured using a water absorbency tester specified in JIS P 8140. First, a solvent (diethylene glycol ethyl methyl ether manufactured by FUJIFILM Wako Pure Chemical Corporation) was contacted with a surface of a test piece on the print receiving layer side for 60 seconds, and a surplus of the solvent was removed, followed by measurement of the mass of the test piece. Subsequently, the measured mass of the test piece was subtracted from the original mass of the test piece. The mass of the solvent absorbed per $m^2$ was defined as a solvent-absorptive capacity ($cc/m^2$).

(Liquid absorption rate)

The liquid absorption rate at a surface of the recording paper on the print receiving layer side was measured using a water absorbency tester specified in JIS P 8140. A solvent (diethylene glycol ethyl methyl ether manufactured by FUJIFILM Wako Pure Chemical Corporation) was contacted with a surface of a test piece on the print receiving layer side for 5 seconds. The solvent-absorptive capacity was calculated. A value obtained by dividing the solvent-absorptive capacity by the solvent contact time was defined as a liquid absorption rate ($cc/m^2 \cdot 0.5$ s).

(Surface strength)

The surface strength of the recording paper on the print receiving layer side was measured as follows. Cellophane tape (manufactured by NICHIBAN Co., Ltd., trade name: CT-18) was bonded to the surface on the print receiving layer side, and the ink peeling strength was measured according to JAPAN TAPPI No. 18-2 (Test method for internal bond strength), where an internal bond tester (manufactured by KUMAGAI RIKI KOGYO Co., Ltd., trade name) was used. The average value of two measurement results was defined as surface strength.

(Thickness)

The thickness (total thickness) of the recording paper was measured according to JIS K7130: 1999, where a constant-pressure thickness measuring device (manufactured by Teclock Corporation, trade name: PG-01J) was used. The thickness of each layer in the recording paper was determined as follows. A sample to be measured was cooled to a temperature of -60°C or lower with liquid nitrogen, and the sample placed on a glass plate was cut with a razor blade (manufactured by Schick Japan K.K., trade name: Proline Blade) vertically applied to the sample, thereby preparing a sample for cross-section observation. Cross-section observation was performed on the obtained sample using a scanning electron microscope (manufactured by JEOL Ltd., trade name: JSM-6490), boundary lines for each resin composition were identified by the structured appearance, and the total thickness was multiplied by the ratio of the thickness of each layer observed in the total thickness of the recording paper. Table 3 shows the thicknesses of print receiving layers and liquid-absorptive layers which were determined by such a method. Since the recording papers of Comparative Examples 1 and 2 do not comprise the print receiving layer and the liquid-absorptive layer, Table 3 shows the thickness of the coating layer for Comparative Example 1, and the thickness of the support layer for Comparative Example 2.

(Stiffness)

The Galley stiffness of the recording paper was measured according to JIS L1096: 2010, where the Gally stiffness in the machine direction of the recording paper was measured in an environment at a temperature of 23°C and a humidity of 50% RH using a Galley stiffness tester (manufactured by DAIEI KAGAKU SEIKI MFG. co., ltd., trade name: GAS-100).

(Glossiness of surface on print receiving layer side)

The glossiness of a surface of the recording paper on the print receiving layer side was measured according to JIS P 8142: 1993, where the 75 degree specular gloss was measured.

(Smoothness of surface on print receiving layer side)

The Oken-type smoothness of a surface of the recording paper on the print receiving layer side was measured with a digital Oken-type air permeability and smoothness tester ("EYO-55-1M" manufactured by Asahi Seiko Co., Ltd.) according to JIS P 8155: 2010, "Paper and Board - Determination of Smoothness - Oken Method".

(Average pore size)

The average pore size of the print receiving layer was determined by the following method. A surface of a layer of interest was observed with a scanning electron microscope, the observation image was captured in an image analysis device, and image analysis was performed on the observation region to calculate and determine the average pore size of pores on the surface.

(Porosity)

The porosity of each of the print receiving layer and the liquid-absorptive layer was determined by the following method. A cross-section of a layer of interest was observed with a scanning electron microscope, and the thickness of the layer was measured. The theoretical thickness before pore formation was calculated from the grammage and the real density of the resin composition forming the layer, and the porosity was calculated from the following calculation expression.

$$\text{Porosity } (\%) = 100 \times (1 \text{-theoretical thickness / layer thickness})$$

[Table 3]

Table 3

| | Recording paper | | | | | | | | |
| --- | --- | --- | --- | --- | --- | --- | --- | --- | --- |
| | Coating layer | | Print receiving layer | | | | Liquid-absorptive layer | | |
| | Coating composition | Coating mass after drying [g/m²] | Resin composition | Grammage [g/m²] | Average pore size [μm] | Porosity [%] | Resin composition | Grammage [g/m²] | Porosity [%] |
| Example 1 | a | 0.15 | e | 2 | 1.0 | 45 | c | 30.0 | 47 |
| Example 2 | a | 0.15 | e | 6 | 1.0 | 45 | c | 30.0 | 47 |
| Example 3 | a | 0.15 | e | 15 | 1.0 | 45 | c | 30.0 | 47 |
| Example 4 | a | 0.15 | e | 15 | 1.0 | 45 | c | 20.0 | 47 |
| Example 5 | a | 0.15 | f | 2 | 8.0 | 46 | c | 30.0 | 47 |
| Example 6 | a | 0.15 | g | 2 | 15.0 | 48 | c | 30.0 | 47 |
| Example 7 | a | 0.15 | e | 2 | 1.0 | 45 | c | 30.0 | 47 |
| Example 8 | a | 0.15 | e | 2 | 1.0 | 49 | c | 30.0 | 52 |
| Example 9 | a | 0.15 | e | 2 | 1.0 | 36 | c | 30.0 | 45 |
| Example 10 | a | 0.3 | e | 2 | 1.0 | 45 | c | 30.0 | 47 |
| Example 11 | b | 0.15 | e | 2 | 1.0 | 45 | c | 30.0 | 47 |
| Example 12 | a | 0.15 | e | 2 | 1.0 | 45 | c | 30.0 | 47 |
| Example 13 | d | 0.15 | e | 2 | 1.0 | 45 | c | 30.0 | 47 |
| Example 14 | d | 0.15 | e | 2 | 1.0 | 35 | c | 30.0 | 47 |
| Comparative Example 1 | c | 40 | - | - | - | - | - | - | - |
| Comparative Example 2 | - | - | - | - | - | - | - | - | - |
| Comparative Example 3 | a | 0.15 | e | 2 | 0.0 | 0 | c | 30.0 | 0 |
| Comparative Example 4 | - | - | e | 2 | 1.0 | 45 | c | 30.0 | 47 |
| Comparative Example 5 | a | 0.15 | e | 2 | 1.0 | 30 | c | 30.0 | 42 |
| Comparative Example 6 | a | 0.15 | e | 2 | 1.0 | 45 | d | 30.0 | 32 |
| Comparative Example 7 | a | 0.15 | c | 2 | 25.0 | 47 | c | 30.0 | 47 |

EP 4 545 308 A1

Table 3 continued

| | Recording paper | | | | | | | Liquid-absorptive capacity [cc/m$^2$] |
|---|---|---|---|---|---|---|---|---|
| | Support layer | Back surface layer | Stretching conditions | | | | | |
| | | | Number of stretched axes | Longitudinal stretching | | Lateral stretching | | |
| | Resin composition | Resin composition | | Temperature [°C] | Ratio | Temperature [°C] | Ratio | |
| Example 1 | a | a | 1/1/2/1 | 140 | 5 | 155 | 9 | 22.0 |
| Example 2 | a | a | 1/1/2/1 | 140 | 5 | 155 | 9 | 22.0 |
| Example 3 | a | a | 1/1/2/1 | 140 | 5 | 155 | 9 | 25.0 |
| Example 4 | a | a | 1/1/2/1 | 140 | 5 | 155 | 9 | 18.0 |
| Example 5 | a | a | 1/1/2/1 | 140 | 5 | 155 | 9 | 22.0 |
| Example 6 | a | a | 1/1/2/1 | 140 | 5 | 155 | 9 | 22.0 |
| Example 7 | b | a | 1/1/2/1 | 140 | 5 | 155 | 9 | 22.0 |
| Example 8 | a | a | 1/1/2/1 | 140 | 5 | 145 | 9 | 27.0 |
| Example 9 | a | a | 1/1/2/1 | 140 | 5 | 160 | 9 | 16.0 |
| Example 10 | a | a | 1/1/2/1 | 140 | 5 | 155 | 9 | 22.0 |
| Example 11 | a | a | 1/1/2/1 | 140 | 5 | 155 | 9 | 22.0 |
| Example 12 | a | a | 1/1/1/1 | - | - | 155 | 9 | 22.0 |
| Example 13 | a | a | 1/1/2/1 | 140 | 5 | 155 | 9 | 22.0 |
| Example 14 | a | a | 1/1/2/1 | 140 | 5 | 160 | 9 | 17.0 |
| Comparative Example 1 | a | a | 2/1 | 140 | 5 | 155 | 9 | 65.0 |
| Comparative Example 2 | h | - | Unstretched | - | - | - | - | 47.0 |
| Comparative Example 3 | a | a | None//none none//none | - | - | - | - | 0.0 |
| Comparative Example 4 | a | a | 1/1/2/1 | 140 | 5 | 155 | 9 | 22.0 |
| Comparative Example 5 | a | a | 1/1/2/1 | 140 | 5 | 165 | 9 | 9.0 |
| Comparative Example 6 | a | a | 1/1/2/1 | 140 | 5 | 155 | 9 | 3.0 |
| Comparative Example 7 | a | a | 1/1/2/1 | 140 | 5 | 155 | 9 | 22.0 |

Table 3 continued

| | Recording paper | | | | | |
|---|---|---|---|---|---|---|
| | Absorption rate [cc/m²·0.5 sec] | Surface strength [kgf/cm] | Stiffness [mN] | Thickness [μm] print receiving layer/liquid-absorptive layer | Glossiness of surface on receiving layer side [%] | Smoothness of surfaces on receiving layer side [sec] |
| Example 1 | 15.0 | 1.1 | 1.0 | 2/42 | 65 | 2000 |
| Example 2 | 13.0 | 1.1 | 1.0 | 7/42 | 65 | 4000 |
| Example 3 | 9.5 | 1.1 | 1.0 | 17/42 | 65 | 5000 |
| Example 4 | 9.5 | 1.1 | 1.0 | 17/28 | 65 | 5000 |
| Example 5 | 18.0 | 0.8 | 1.0 | 2/42 | 65 | 1500 |
| Example 6 | 23.0 | 0.7 | 1.0 | 2/42 | 65 | 1500 |
| Example 7 | 15.0 | 1.1 | 1.0 | 2/42 | 65 | 2000 |
| Example 8 | 17.0 | 1.0 | 1.0 | 3/43 | 65 | 2000 |
| Example 9 | 9.5 | 1.2 | 1.0 | 2/42 | 65 | 2000 |
| Example 10 | 10.0 | 1.1 | 1.0 | 2/42 | 65 | 2000 |
| Example 11 | 17.0 | 1.1 | 1.0 | 2/42 | 65 | 2000 |
| Example 12 | 15.0 | 1.1 | 1.0 | 2/42 | 65 | 2000 |
| Example 13 | 17.0 | 1.1 | 1.0 | 2/42 | 65 | 2000 |
| Example 14 | 10.0 | 1.1 | 1.0 | 2/42 | 65 | 2000 |
| Comparative Example 1 | 12.0 | 2.0 | 1.2 | 20/- | 20 | 80 |
| Comparative Example 2 | 6.0 | 2.5 | 0.3 | 140/- | 88 | 80 |
| Comparative Example 3 | 0.0 | 2.5 | 0.3 | 1/20 | 25 | 1000 |
| Comparative Example 4 | 18.0 | 1.1 | 1.0 | 2/42 | 50 | 2000 |
| Comparative Example 5 | 8.0 | 1.4 | 1.0 | 1/39 | 65 | 2000 |
| Comparative Example 6 | 13.0 | 1.5 | 1.0 | 2/32 | 65 | 2000 |
| Comparative Example 7 | 30.0 | 0.8 | 1.0 | 2/42 | 50 | 2000 |

The recording papers obtained in Examples and Comparative Examples were evaluated for the following items. Table 4 shows the results.

(Solvent ink-jet printing)

A sample image was printed on a surface of the recording paper on the print receiving layer side using a solvent ink-jet printer "SureColor SC-S80650" (manufactured by Seiko Epson Corporation).

(Density)

After the solvent ink-jet printing, a portable spectral density meter (manufactured by X-Rite Inc., trade name: "508") was applied to a printed surface to measure the print density at nine black areas per sample, the average value thereof was determined, and the density was evaluated on the basis of the following criteria.

5 (Good): The average value of print density was 1.6 or more, and the ink color came out well.

4 (Good): The average value of print density was less than 1.6 and 1.4 or more, and the ink color came out well.

3 (Acceptable, lower limit for practical use): The average value of print density was less than 1.4 and 1.2 or more, and there was a slight decrease in density, which did not become a problem.

2 (Unacceptable, unsuitable for practical use): The average value of print density was less than 1.2 and 1.0 or more, and there was a decrease in density.

1 (Unacceptable, unsuitable for practical use): The average value of print density was less than 1.0.

(Blur)

After the solvent ink-jet printing, the state of an image on the recording paper after printing was visually observed with the image scaled up through a magnifying glass. The blur on the recording paper was evaluated on the basis of the following criteria by the observed state of the image.

5 (Good): The image was sharp.

4 (Good): The image was sharp when visually inspected , but had a slightly expanded dot area when observed through the magnifying glass.

3 (Acceptable): The image had a slightly unclear blur of ink when visually inspected , and had an expanded dot area when observed through the magnifying glass.

2 (Acceptable, lower limit for practical use): The image had an unclear blur of ink when visually inspected , and had an expanded dot area when observed through the magnifying glass.

1 (Unacceptable, unsuitable for practical use): The image had faded areas.

(Dryness)

**After the** solvent ink-jet printing, one print sample was arbitrarily taken out every 10 minutes, and the dried state of ink on a solid image portion was examined by rubbing the portion with a finger. The dryness was evaluated on the basis of the following criteria.

5 (Good): The drying rate was very high (it took 5 minutes or less to be dried, and sticking to the finger did not occur).

4 (Good): The drying rate was very high (it took 10 minutes or less to be dried, and sticking to the finger did not occur).

3 (Acceptable, lower limit for practical use): The drying rate was high, and did not become a problem (it took more than 10 minutes and 20 minutes or less to be dried).

2 (Unacceptable, unsuitable for practical use): The drying rate was slightly low, and became a problem (it took more than 20 minutes and 30 minutes or less to be dried).

1 (Unacceptable, unsuitable for practical use): The drying rate was low, and became a problem (not dried even after more than 30 minutes).

(Fixation)

(Abrasion)

After the solvent ink-jet printing, the image portion was cut into a size of 30 mm × 120 mm one day after the printing, and set in a Gakushin tester (manufactured by Suga Test Instruments Co., Ltd.). As an evaluation under dry conditions, gauze dried at room temperature was attached to a 215 g-load weight, the surface of the printed image portion was abrased 100 times with the weight, and the peeled state of ink was evaluated by visual observation. As evaluation under wet conditions, gauze impregnated with 20 μL of pure water at room temperature was attached to a 215 g-load weight, the surface of the printed image portion was abrased 100 times with the weight, and the peeled state of ink was evaluated by visual observation. The abrasion was evaluated on the basis of the following criteria.

5 (Good): 95% or more of the image portion abrased remained.

4 (Good): 90% or more of the image portion remained after it was abrased.

3 (Acceptable, lower limit for practical use): 80% or more of the image portion abrased remained.

2 (Unacceptable, unsuitable for practical use): 70% or more of the image portion abrased remained.

1 (Unacceptable, unsuitable for practical use): The remaining ratio of the image portion abrased was less than 70%.

(Ink adhesion)

After the solvent ink-jet printing, the adhesive surface of a cellophane tape (manufactured by NICHIBAN Co., Ltd., trade name: Sellotape (registered trademark) CT-18) was bonded to the print surface, and rubbed with a finger three times to achieve sufficiently intimate attachment. The intimately attached cellophane tape was peeled by hand at a rate of 300 m/min in the direction of 180 degrees, and the remaining ratio of ink on the recording paper was then calculated using a small general-purpose analysis apparatus (manufactured by NIRECO CORPORATION, model: LUZEX-AP). Specifically, binarization processing was performed on an image obtained by photographing the print surface, and the ratio of the area occupied by ink was calculated as a remaining ratio. The ink adhesion was evaluated on the basis of the following criteria by the calculated remaining ratio of ink.

5 (Good): The remaining ratio of ink was 80% or more.
3 (Acceptable, lower limit for practical use): The remaining ratio of ink was 50% or more and less than 80%.
1 (Unacceptable, unsuitable for practical use): The remaining ratio of ink was less than 50%.

(Waviness)

A black solid was printed on a surface of the recording paper on the print receiving layer side using a solvent ink-jet printer "SureColor SC-S80650" (manufactured by Seiko Epson Corporation), and the frequency of occurrence of waviness of the printed portion was visually evaluated on the basis of the following criteria.

5 (Good): Waviness did not occur, and an extremely good level was presented.
3 (Acceptable, lower limit for practical use): Waviness slightly occurred.
1 (Unacceptable, unsuitable for practical use): Waviness occurred.

(Blocking)

A black solid was printed on a surface of the recording paper on the print receiving layer side using a solvent ink-jet printer "SureColor SC-S80650" (manufactured by Seiko Epson Corporation), and the recording paper after the printing was wound into a roll shape, and stored for 1 day in an atmosphere at a temperature of 40°C and a relative humidity of 50%, followed by observation of whether it was possible to smoothly draw out the recording paper without causing blocking during draw-out from the roll. The blocking was evaluated on the basis of the following criteria.

5 (Good): A peeling sound was not made, and it was possible to smoothly draw out the recording paper.
3 (Acceptable, lower limit for practical use): A peeling sound was made, but the appearance of the substrate layer after the draw-out was not impaired.
1 (Unacceptable, unsuitable for practical use): A big peeling sound was made, and the appearance of the substrate layer after the draw-out was impaired.

(Weather resistance)

In use for posters and the like, there may be a problem of peel of ink in the outdoor use. However, in the evaluation of weather resistance, results are likely to be fluctuated by variable factors such as climate and weather if an exposure test is actually conducted outdoors. In the present embodiment, accelerating treatment (exposure test) for weather resistance was performed on a printed matter under uniform conditions according to JIS K-7350-4, followed by solvent ink-jet printing. The ink adhesion was evaluated. More specifically, accelerating treatment was performed under the following conditions.

An ultra-accelerating weather resistance tester (manufactured by DAIPLA WINTES CO., LTD., trade name "METAL WEATHER KU-R5N-A", metal halide lamp type) and a glass filter permeable to ultraviolet light at 295 to 450 nm "KF-2 Filter" (trade name) were used. The four sides of a test piece obtained by cutting a printed recording paper into a size of 90 mm × 150 mm by the above-described procedure were bonded and fixed to a stainless steel plate (100 mm × 200 mm) with an aluminum foil tape "AL-T" (trade name) (manufactured by Takeuchi Industry Corporation) such that the print surface was an exposed surface. This was placed in a tester. The radiant illumination at the surface of the test piece was 90 W/m$^2$, and the black panel temperature was 63°C. The accelerating treatment was performed for two cycles, where one cycle is composed of exposure at a temperature of 63°C and a relative humidity of 50% for 5 hours and exposure at a temperature of 30°C and a relative humidity of 98% for 3 hours. Therefore, the amount of radiant exposure of the printed surface is $5.18 \times 10^6$ J/m$^2$.

Subsequently, a friction test was conducted and evaluation was performed as in the case of the abrasion property on a test piece subjected to weather resistance accelerating treatment.

5 (Good): 95% or more of the image portion abrased remained.

3 (Acceptable, lower limit for practical use): 80% or more of the image portion abrases remained.

1 (Unacceptable, unsuitable for practical use): The remaining ratio of the image portion abrased was less than 80%.

[Table 4]

Table 4

| | Solvent ink-jet printability | | | | | | | |
| --- | --- | --- | --- | --- | --- | --- | --- | --- |
| | Density | Blur | Dryness | Fixation | | Waviness | Blocking | Weather resistance |
| | | | | Abrasion | Ink adhesion | | | |
| Example 1 | 5 | 4 | 5 | 4 | 3 | 3 | 5 | 5 |
| Example 2 | 5 | 3 | 5 | 4 | 3 | 3 | 5 | 5 |
| Example 3 | 5 | 2 | 5 | 4 | 3 | 3 | 5 | 5 |
| Example 4 | 5 | 3 | 4 | 4 | 3 | 3 | 5 | 5 |
| Example 5 | 4 | 3 | 4 | 4 | 3 | 3 | 5 | 5 |
| Example 6 | 3 | 2 | 5 | 3 | 3 | 3 | 5 | 5 |
| Example 7 | 5 | 4 | 5 | 4 | 3 | 3 | 5 | 5 |
| Example 8 | 5 | 5 | 5 | 4 | 3 | 3 | 5 | 5 |
| Example 9 | 5 | 2 | 4 | 4 | 3 | 3 | 5 | 5 |
| Example 10 | 5 | 2 | 5 | 5 | 3 | 3 | 5 | 5 |
| Example 11 | 5 | 4 | 5 | 5 | 5 | 3 | 5 | 5 |
| Example 12 | 5 | 4 | 5 | 4 | 3 | 3 | 5 | 5 |
| Example 13 | 5 | 5 | 5 | 5 | 5 | 3 | 5 | 5 |
| Example 14 | 5 | 3 | 5 | 5 | 5 | 3 | 5 | 5 |
| Comparative Example 1 | 5 | 5 | 5 | 1 | 3 | 5 | 5 | 3 |
| Comparative Example 2 | 5 | 5 | 5 | 3 | 3 | 1 | 1 | 1 |
| Comparative Example 3 | 5 | 1 | 1 | 4 | 3 | 5 | 5 | 5 |
| Comparative Example 4 | 1 | 4 | 5 | 1 | 1 | 3 | 5 | 5 |
| Comparative Example 5 | 5 | 2 | 2 | 4 | 3 | 3 | 5 | 5 |
| Comparative Example 6 | 5 | 1 | 2 | 4 | 3 | 3 | 5 | 5 |
| Comparative Example 7 | 2 | 4 | 5 | 2 | 3 | 3 | 5 | 5 |

As shown in Table 4, the recording papers of Examples 1 to 14, which comprise a print receiving layer, a liquid-absorptive layer and a specified coating layer and in which the liquid absorption rate is in a specific range and the liquid-absorptive capacity is equal to or greater than a specific value, thus was excellent in print quality, dryness and weather resistance. On the other hand, the recording papers of Comparative Examples 1 to 7 were shown to be unsuitable for practical use in regard to one or more evaluation items, and were not able to secure all of print quality, a drying property and weather resistance.

Comparison of Examples 1 to 3 shows that the liquid absorption rate tended to increase as the grammage of the print receiving layer decreased. In association with this, in the recording papers of Examples 1 to 3, a higher liquid absorption rate tended to lead to an improved blur evaluation score.

Comparison of Examples 3 and 4 shows that in Example 3, the liquid-absorptive layer had a larger grammage, and a larger liquid-absorptive capacity was obtained. The recording paper of Example 3 was superior in dryness evaluation score to the recording paper of Example 4.

Comparison of Examples 1, 5 and 6 shows that a difference in type (average particle size and surface treatment) and formulation of the filler used for the print receiving layer led to a difference in average pore size of the print receiving layer and a varied liquid absorption rate. In the recording papers of Examples 1, 5 and 6, a lower liquid absorption rate tended to lead to an improved blur evaluation score.

Comparison of Examples 1 and 7 shows that the recording papers of Examples 1 and 7 were equivalent in evaluation results although they were different in that in Example 7, the resin composition used for the support layer did not contain a filler.

Comparison of Examples 1, 8 and 9 shows that there was a tendency that the porosity decreased and the liquid-absorptive capacity and the liquid absorption rate both became lower as the lateral stretching temperature increased. In association with this, among the recording papers of Examples 1, 8 and 9, there was a difference in evaluation results of dryness and blur.

Comparison of Examples 1 and 10 shows that in Example 10, the coating layer has a larger coating mass after drying, and a lower liquid absorption rate is obtained. The recording paper of Example 1 was superior in blue evaluation score to the recording paper of Example 10.

The coating compositions used for the coating layer in Examples 1 and 11 are different. The recording paper of Example 11, in which a water-dispersible resin is used for the coating composition, thus was superior in abrasion evaluation score to the recording paper of Example 1.

Comparison of Examples 1 and 12 shows that the recording papers of Examples 1 and 12 were equivalent in evaluation results although they were different in the number of stretched axes of the support layer.

Comparison of Examples 11 and 13 shows that the recording paper of Example 13, in which the coating composition is composed only of an aqueous binder, thus was superior in blur evaluation score.

The recording paper of Comparative Example 1, which comprises a coating layer containing a pigment, has a high content of an inorganic filler in the coating layer. The recording paper of Comparative Example 1 was evaluated as being unsuitable for practical use in regard to the abrasion property in comparison with the recording paper of Example 1 which does not contain an inorganic filler in the coating layer.

The recording paper of Comparative Example 2, which comprises a layer containing a vinyl chloride-type copolymer, does not comprise a porous layer such as a coating layer, a print receiving layer and a liquid-absorptive layer. The recording paper of Comparative Example 2 was evaluated as being unsuitable for practical use in regard to waviness, blocking and weather resistance.

The recording paper of Comparative Example 3 does not comprise a porous layer, and thus has an extremely low liquid-absorptive capacity and liquid absorption rate. The recording paper of Comparative Example 2 was evaluated as being unsuitable for practical use in regard to blur and drying.

The recording paper of Comparative Example 4 does not comprise a coating layer. The recording paper of Comparative Example 4 was evaluated as being unsuitable for practical use in regard to density, abrasion and ink fixation.

The recording paper of Comparative Example 5 has an extremely low liquid-absorptive capacity. The recording paper of Comparative Example 5 was evaluated as being unsuitable for practical use in regard to drying.

The recording paper of Comparative Example 6 has an extremely low liquid-absorptive capacity. The recording paper of Comparative Example 6 was evaluated as being unsuitable for practical use in regard to blur and drying.

The recording paper of Comparative Example 7 has an extremely high liquid absorption rate. The recording paper of Comparative Example 7 was evaluated as being unsuitable for practical use in regard to density and abrasion.

While the present invention has been described in detail and with reference to specific embodiments, it is obvious to those skilled in the art that various changes and modifications can be made without departing from the spirit and the scope of the present invention.

The present application is based on Japanese Patent Application (Japanese Patent Application No. 2022-102227) filed on June 24, 2022, the contents of which are incorporated herein by reference.

Reference Signs List

1    Recording paper
9    Back surface layer
10   Support layer
11   Liquid-absorptive layer
12   Print receiving layer
13   Coating layer

**Claims**

**1.** A recording paper comprising a coating layer, a print receiving layer and a liquid-absorptive layer in the stated order, wherein

the coating layer contains an aqueous binder as a resin component,
each of the print receiving layer and the liquid-absorptive layer is a porous layer containing a thermoplastic resin,
a liquid absorption rate at a surface on the print receiving layer side is 5 to 25 cc/m$^2$·0.5 s,
a liquid-absorptive capacity is 10 cc/m$^2$ or more, and
a content of an inorganic filler per 100 parts by mass of the aqueous binder in the coating layer is 9 parts by mass or less.

2. The recording paper according to claim 1, wherein a porosity of the print receiving layer is 30 to 50%, and a porosity of the liquid-absorptive layer is 40 to 60%.

3. The recording paper according to claim 1 or 2, wherein the each of the print receiving layer and the liquid-absorptive layer is a stretched layer containing a filler.

4. The recording paper according to claim 1 or 2, wherein a content of the filler in the print receiving layer is 45 to 75 mass%.

5. The recording paper according to claim 1 or 2, comprising a filler having a hydrophobized surface as the filler in the print receiving layer.

6. The recording paper according to claim 1 or 2, wherein an average pore size of the print receiving layer is 0.5 to 20 $\mu$m.

7. The recording paper according to claim 1 or 2, wherein a content of the resin component in the coating layer is more than 80 mass%.

8. The recording paper according to claim 1 or 2, wherein a coating mass of the coating layer after drying is 0.05 to 5 g/m$^2$.

FIG. 1

## INTERNATIONAL SEARCH REPORT

| International application No. |
|---|
| **PCT/JP2023/023357** |

**A.    CLASSIFICATION OF SUBJECT MATTER**

*B41M 5/52*(2006.01)i; *B32B 5/32*(2006.01)i; *B32B 27/00*(2006.01)i; *B32B 27/20*(2006.01)i
FI:    B41M5/52 110; B32B27/20 Z; B32B27/00 F; B32B5/32

According to International Patent Classification (IPC) or to both national classification and IPC

**B.    FIELDS SEARCHED**

Minimum documentation searched (classification system followed by classification symbols)

B41M5/52; B32B5/32; B32B27/00; B32B27/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2021/241489 A1 (YUPO CORPORATION) 02 December 2021 (2021-12-02) claims, examples | 1-8 |
| A | WO 2022/113846 A1 (YUPO CORPORATION) 02 June 2022 (2022-06-02) claims, examples | 1-8 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 August 2023** | **15 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| WO | 2021/241489 | A1 | 02 December 2021 | EP | 4101644 | A1 | |
| | | | | claims, examples | | | |
| WO | 2022/113846 | A1 | 02 June 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001164017 A
- JP 2001270238 A
- JP 2010234677 A
- JP 2022102227 A